# EUROPÄISCHE PATENTSCHRIFT

(11) **EP 0 269 886 B1**
(45) Veröffentlichungstag und Bekanntmachung des Hinweises auf die Patenterteilung: **07.07.1993**
(21) Anmeldenummer: 87116116.2
(22) Anmeldetag: 02.11.1987
(51) Int. Cl.: C08G 77/26

(54) **Verfahren zur Herstellung von Organopolysiloxanen mit basischen Stickstoff aufweisenden, SiC-gebundenen organischen Resten**
Process for preparing polysiloxanes having silicon-bound basic nitrogen-containing groups
Procédé de préparation de polysiloxanes à groupes organiques contenant des atomes d'azote basique

(30) Priorität: 06.11.1986 DE 3637837
(43) Veröffentlichungstag der Anmeldung: 08.06.1988
(73) Patentinhaber: Schill & Seilacher GmbH & Co., D-22113 Hamburg (DE)
(72) Erfinder: Gamon, Norbert, Dr., Dipl.-Chem., D-21050 Seevetal 11 (DE); Braunsperger, D-8263 Burghausen (DE)
(74) Vertreter: UEXKÜLL & STOLBERG

(56) Entgegenhaltungen:
- US-A- 2 921 950
- US-A- 2 947 771
- US-A- 4 661 577

## Beschreibung

Verfahren zur Herstellung von Organopolysiloxanen mit basischen Stickstoff aufweisenden, SiC-gebundenen organischen Resten, wobei diese Organopolysiloxane aus Einheiten der Formel R₃SiO_{1/2}, worin R gleiche oder verschiedene, einwertige, gegebenenfalls fluorierte Kohlenwasserstoffreste bedeutet, R₂SiO, worin R die vorstehend dafür angegebene Bedeutung hat, und YSi(CH₃)O, worin Y einen einwertigen, SiC-gebundenen organischen Rest mit basischem Stickstoff bedeutet, sind bereits bekannt. Hierzu wird auf z.B. US 2,947,771 (ausgegeben 2. August 1960, D.L. Bailey, Union Carbide Corporation) verwiesen.

Es bestand nun die Aufgabe, ein verhältnismäßig einfaches Verfahren mit verhältnismäßig leicht zugänglichen Organosiliciumverbindungen als Ausgangsprodukten bereitzustellen, durch das Organopolysiloxane mit basischen Stickstoff aufweisenden, SiC-gebundenen organischen Resten, wobei diese Organopolysiloxane solche der oben definierten Art sind, oder mindestens ein Teil der Einheiten der Formel YSi(CH₃)O durch solche der Formel YSiO_{3 /2} ersetzt ist, bereitzustellen, durch das derartige Orgnanopolysiloxane, die besonders wenig kondensationsfähige Gruppen, wie Silanolgruppen, oder kondensationsfähige Atome, wie Si-gebundenen Wasserstoff, enthalten und deshalb besonders gut lagerfähig sind, in guten Ausbeuten erhalten werden. Diese Aufgabe wird durch die Erfindung gelöst.

Gegenstand der Erfindung ist ein Verfahren zur Herstellung von Organopolysiloxanen mit basischen Stickstoff aufweisenden, SiC-gebundenen organischen Resten, dadurch gekennzeichnet, daß in einer
1. Stufe Silan der Formel

   YSi(CH₃)ₓ(OR¹)₃₋ₓ ,

   worin R¹ gleiche oder verschiedene Alkylreste mit 1 bis 4 Kohlenstoffatomen je Rest, der einwertige, SiC-gebundene, organische Rest mit basischem Stickstoff Y die Formel

   R²₂NR³-

   aufweist, worin R² Wasserstoff oder gleiche oder verschiedene Alkyl- oder Cycloalkyl- oder Aminoalkylreste und R³ einen zweiwertigen, von aliphatischen Mehrfachbindungen freien Kohlenwasserstoffrest mit einem Kohlenstoffatom oder 3 oder 4 Kohlenstoffatomen je Rest bedeuten, und x 0 oder 1 ist, oder Teilhydrolysat von derartigem Silan oder derartiges Silan und Teilhydrolysat von derartigem Silan mit Organo(poly)siloxan der Formel

   R₃SiO(SiR₂O)ₙSiR₃,

   worin R gleich oder verschiedene, einwertige gegebenenfalls fluorierte, gesättigte oder ungesättigte, aliphatische Kohlenwasserstoffreste, cycloaliphatische Kohlenwasserstoffreste, Aryl-, Alkaryl- oder Aralkylreste mit 1 bis 18 Kohlenstoffatomen je Rest und n 0 oder eine ganze Zahl im Wert von 1 bis 100 bedeuten, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer
2. Stufe das in der 1. Stufe erhaltene Organopolysiloxan mit Wasser umgesetzt wird, um Gruppen der Formel

   -OR¹ ,

   worin R¹ die oben dafür angegebenen Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit und sowie gegebenenfalls in einer
3. Stufe das nach Beendigung der 2. Stufe vorliegende Produkt mit cyclischem Organopolysiloxan der Formel

   (R₂SiO)ₘ ,

   worin R die oben dafür angegebene Bedeutung hat und m eine ganze Zahl von 3 bis 12 ist, oder Organo(poly)siloxan der Formel

   R₃SiO(SiR₂O)ₚSiR₃ ,

   worin R die oben dafür angegebene Bedeutung hat und p 0 oder eine ganze Zahl im Wert von mindestens 1 ist, oder einem Gemisch aus derartigem linearem Organo(poly)siloxan und derartigem cyclischem Organopolysiloxan in Gegenwart von basischem Katalysator umgesetzt wird.

Die gegebenenfalls fluorierten Kohlenwasserstoffreste R enthalten 1 bis 18 Kohlenstoffatome je Rest. Beispiele für Kohlenwasserstoffreste R sind der Methyl-, Ethyl-, n-Propyl- und Isopropylrest sowie Butyl-, Octyl-, Tetradecyl- und Octadecylreste, aus Kohlen- und Wasserstoffatomen aufgebaute Reste mit aliphatischer Mehrfachbindung, wie der Vinyl- und Allylrest sowie Hexenylreste; cycloaliphatische Kohlenwasserstoffreste, wie der Cyclopentyl- und Cyclohexylrest sowie Methylcyclohexylreste; aromatische Kohlenwasserstoffreste, wie der Phenylrest und Xenylreste; Alkarylreste, wie Tolylreste; und Aralkylreste, wie der Benzylrest. Ein Beispiel für einen fluorierten Kohlenwasserstoffrest ist der 3,3,3-Trifluorpropylrest.

Beispiele für Alkylreste R¹ sind der Methyl-, Ethyl-, n-Propyl-, Isopropyl-, n-Butyl-, sec.-Butyl- und der tert.-Butylrest, wobei der Methyl- und der Ethylrest bevorzugt sind.

Vorzugsweise bedeutet R³ den Rest der Formel

-(CH₂)₃- .

Die Beispiele für Alkylreste R gelten in vollem Umfang auch für Alkylreste R².

Beispiele für Aminoalkylreste R² sind solche der Formel

H₂N(CH₂)₃-

H₂N(CH₂)₂NH(CH₂)₃-

H₂N(CH₂)₂-

(H₃C)₂N(CH₂)₂-

H₂N(CH₂)₄-

H(NHCH₂CH₂)₃-

und

C₄H₉NHCH₂CH₂NH(CH₂)₂- .

Ein Beispiel für einen Cycloalkylrest R² ist der Cyclohexylrest.
Die einwertigen, SiC-gebundenen Reste mit basischem Stickstoff, also die Reste Y, können aber auch z.B. solche der Formel 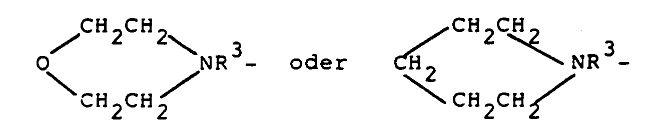
sein, wobei R³ jeweils die oben dafür angegebene Bedeutung hat.

Einzelne Beispiele für Silane der Formel

YSi(CH₃)ₓ(OR¹)₃₋ₓ ,

die in der ersten Stufe des erfindungsgemäßen Verfahrens eingesetzt werden können, sind solche der Formel

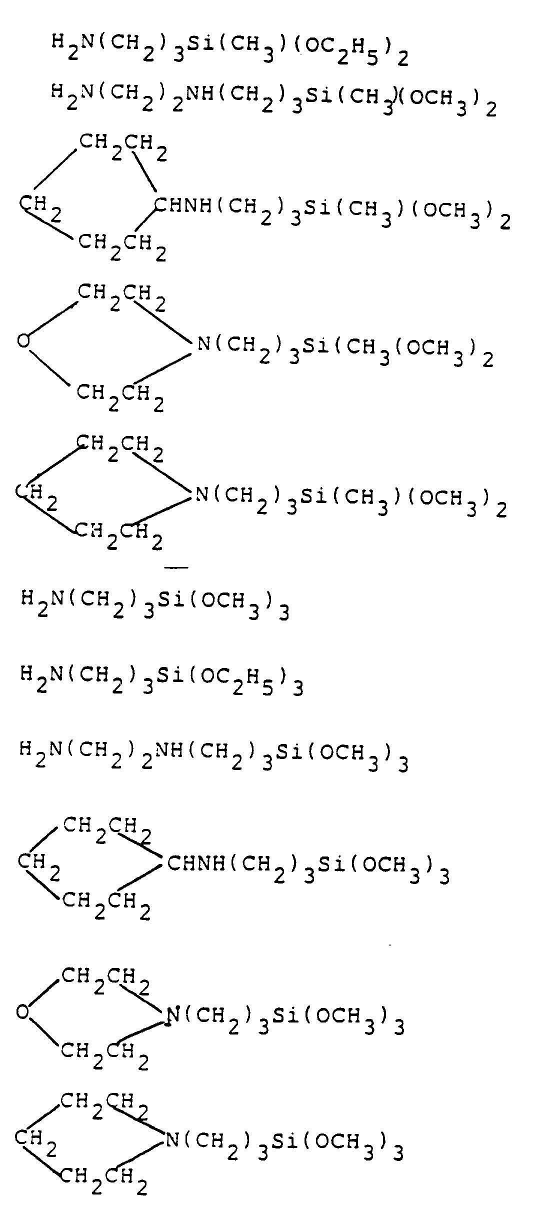

Ein einzelnes Beispiel für ein Teilhydrolysat eines derartigen Silans ist das Disiloxan der Formel

[H₂N(CH₂)₂NH(CH₂)₃Si(CH₃)(OC₂H₅)]₂O.

Es kann eine Art von Silan der Formel

YSi(CH₃)ₓ(OR¹)₃₋ₓ ,

oder dessen Teilhydrolysat in der 1. Stufe des erfindungsgemäßen Verfahrens eingesetzt werden. Es kann aber auch ein Gemisch aus mindestens zwei verschiedenen Arten derartiger Silane oder Teilhydrolysaten derartiger Silane in der 1. Stufe des erfindungsgemäßen Verahrens eingesetzt werden.

Vorzugsweise sind in den Organo(poly)siloxanen der Formel

R₃SiO(SiR₂O)ₙSiR₃ ,

mindestens zwei der Reste R der Siloxaneinheiten der Formel

R₃SiO_{1/2}

Methylreste. Schon wegen der leichteren Zugänglichkeit ist es auch bevorzugt, daß auch in den Einheiten der Formel

SiR₂O

mindestens 50 % der Anzahl der Reste R Methylreste sind.

Es kann eine Art von Organo(poly)siloxan der Formel

R₃SiO(SiR₂O)ₙSiR₃

in der 1. Stufe des erfindungsgemäßen Verfahrens eingesetzt werden. Es kann aber auch ein Gemisch aus mindestens zwei verschiedenen Arten derartiger Organopolysiloxane in der 1. Stufe des erfindungsgemäßen Verfahrens eingesetzt werden.

Als basische Katalysatoren können in der 1. Stufe des erfindungsgemäßen Verfahrens und, falls durchgeführt, auch in der 3. Stufe des erfindungsgemäßen Verfahrens beliebige basische Katalysatoren eingesetzt werden, mit denen die Äquilibrierung von Gemischen aus Organosiliciumverbindungen mit basischen Stickstoff aufweisenden, SiC-gebundenen organischen Resten und Organo(poly)siloxanen ohne derartige Reste gefördert werden kann. Beispiele für derartige Katalysatoren sind Alkalimetallhydride, Alkalimetallhydroxide, Alkalimetallsilanolate, bzw. Alkalimetallsiloxanolate, quaternäre Ammoniumhydroxide, quaternäre Ammoniumsilanolate bzw. quaternäre Ammoniumsiloxanolate, quaternäre Phosphoniumhydroxide, quaternäre Phosphoniumsilanolate bzw. quaternäre Phosphoniumsiloxanolate, Alkylalkalimetalle, Alkenylalkalimetalle, Arylalkalimetalle, mit Basen aktivierte Montmorillonite und basische Ionenaustauscherharze. Einzelne Beispiele für derartige basische Katalysatoren sind Natriumhydroxyd, Kaliumhydroxyd, Cäsiumhydroxyd, Kaliummethylsilanolat, Tetra-n-butylphosphoniumhydroxyd, Umsetzungsprodukte aus Tetramethylammoniumhydroxyd und Octamethylcyclotetrasiloxan, Tetramethylammoniumhydroxyd, Benzyltrimethylammoniumhydroxyd, Naphthalinkalium, n-Butyllithium und Amylnatrium.

Die basischen Katalysatoren können in der 1. Stufe des erfindungsgemäßen Verfahrens und, falls durchgeführt, auch in der 3. Stufe des erfindungsgemäßen Verfahrens in den gleichen Mengen eingesetzt werden, in denen sie auch bisher zur Förderung der Äquilibrierung von Gemischen aus Organosiliciumverbindungen mit basischen Stickstoff aufweisenden, SiC-gebundenen organischen Resten und Organo(poly)siloxanen ohne derartige Reste eingesetzt wurden. Es sind dies für mit Basen aktivierte Montmorillonite, basische Ionenaustauscherharze und mit solchen festen basischen Katalysatoren vergleichbare andere basische Katalysatoren vorzugsweise 0,1 bis 10 Gewichtsprozent, bezogen auf das Gesamtgewicht der in der 1. Stufe des erfindungsgemäßen Verfahrens miteinander umzusetzenden Organosiliciumverbindungen und für die anderen oben genannten Katalysatoren und mit diesen anderen Katalysatoren vergleichbaren basischen Katalysatoren vorzugsweise 1 bis 1000 Gewichts-ppm, ebenfalls bezogen auf das Gesamtgewicht der in der 1. Stufe des erfindungsgemäßen Verfahrens miteinander umzusetzenden Organosiliciumverbindungen.

Die 1. Stufe des erfindungsgemäßen Verfahrens wird je nach Temperaturbeständigkeit des jeweils verwendeten basischen Katalysators vorzugsweise bei 15° bis 200°C und beim Druck der umgebenden Atmosphäre, also bei 1020 hPa (abs.) oder etwa 1020 hPa (abs.), durchgeführt. Falls erwünscht, können aber auch höhere oder niedrigere Drücke angewendet werden.

Falls erwünscht, kann die 1. Stufe und, falls durchgeführt, auch die 3. Stufe des erfindungsgemäßen Verfahrens unter einem Schutzgas, wie Stickstoff oder Argon, durchgeführt werden.

In der 1. Stufe des erfindungsgemäßen Verfahrens kann der Inhalt des Reaktionsgefäßes bewegt werden, wobei Rühren bevorzugt ist.

Die in der 1. Stufe des erfindungsgemäßen Verfahrens durchgeführte Umsetzung ist beendet, wenn der Inhalt des Reaktionsgefäßes zumindest nach Entfernen des darin enthaltenen Katalysators klar ist. 0,1 bis 10 Stunden sind im allgemeinen als Dauer dieser Umsetzung ausreichend.

Das in der 1. Stufe des erfindungsgemäßen Verfahrens erhaltene Organopolysiloxan kann vor Durchführung der 2. Stufe des erfindungsgemäßen Verfahrens gelagert werden oder mehr oder weniger unmittelbar nach seiner Herstellung in der 2. Stufe des erfindungsgemäßen Verfahrens weiterverarbeitet werden, ohne daß vorher der in der 1. Stufe des erfindungsgemäßen Verfahrens mitverwendete basische Katalysator aus dem Organopolysiloxan entfernt oder unwirksam gemacht wurde.

In der 2. Stufe des erfindungsgemäßen Verfahrens wird das Wasser vorzugsweise in Mengen von 18 g bis 180 g je Grammäquivalent von in der 1. Stufe des erfindungsgemäßen Verfahrens eingesetzter Gruppe der Formel

-OR¹

verwendet.

Hydrolyse der Gruppen der Formel

-SiOR¹

und Kondensation der Silanolgruppen in der 2. Stufe des erfindungsgemäßen Verfahrens werden vorzugsweise bei 40° bis 200°C und schon wegen des geringeren Aufwands vorzugsweise beim Druck der umgebenden Atmosphäre, also bei 1020 hPa (abs.) oder etwa 1020 hPa (abs.), durchgeführt. Falls erwünscht, können aber auch höhere oder niedrigere Drücke bei dieser Hydrolyse und niedrigere Drücke bei der Kondensation der Silanolgruppen angewendet werden.

Hydrolyse der Gruppen der Formel

-SiOR¹

und Kondensation der Silanolgruppen in der 2. Stufe des erfindungsgemäßen Verfahrens werden durch von der 1. Stufe her noch vorliegenden Katalysator und/oder durch Zugabe von weiterem Katalysator gefördert.

Das Befreien des in der 2. Stufe des erfindungsgemäßen Verfahrens erhaltenen Produkts von Wasser und Alkanol kann z.B. durch Destillieren erfolgen.

Zumindest während der Hydrolyse der Gruppen der Formel

-SiOR¹

und/oder Kondensation der Silanolgruppen in der 2. Stufe des erfindungsgemäßen Verfahrens kann der Inhalt des Reaktionsgefäßes bewegt werden, wobei Rühren bevorzugt ist.

Der Katalysator kann nach Durchführung der 2. Stufe des erfindungsgemäßen Verfahrens aus dem Organopolysiloxan entfernt oder unwirksam gemacht werden, um ein besonders gut lagerfähiges Organopolysiloxan mit basischen Stickstoff aufweisenden, SiC-gebundenen organischen Resten zu erhalten. Bei Katalysatoren wie z.B. quaternären Ammoniumhydroxyden, quaternären Ammoniumsilanolaten und quaternären Ammoniumsiloxanolaten reicht Erwärmen über den Zersetzungpunkt, meist etwa 150°C, dieser Katalysatoren für das Unwirksammachen aus.

Auch in den in der gegebenenfalls durchgeführten 3. Stufe des erfindungsgemäßen Verfahrens eingesetzten cyclischen Organopolysiloxanen der Formel

(R₂SiO)ₘ

und Organopolysiloxanen der Formel

R₃SiO(SiR₂O)ₚSiR₃

sind vorzugsweise mindestens 50% der Anzahl der Reste R in den Einheiten der Formel

SiR₂O

und in den Einheiten der Formel

R₃SiO

mindestens 2 der Reste R Methylreste.

Vorzugsweise ist der durchschnittliche Wert von m 4 oder etwa 4.

Eine obere Grenze für p besteht nicht, weil die gegebenenfalls durchgeführte 3. Stufe des erfindungsgemäßen Verfahrens, wie übrigens auch die 1. Stufe, erforderlichenfalls in einem gegenüber den Reaktionsteilnehmern und Katalysator inerten Lösungsmittel, wie Toluol, durchgeführt werden kann.

Es kann eine Art von cyclischem Diorganopolysiloxan oder linearem Organopolysiloxan in der gegebenenfalls durchgeführten 3. Stufe des erfindungsgemäßen Verfahrens verwendet werden. Es kann aber auch ein Gemisch aus mindestens zwei verschiedenen derartigen Organopolysiloxanen in dieser Stufe eingesetzt werden.

Die Mengenverhältnisse der in der gegebenenfalls durchgeführten 3. Stufe des erfindungsgemäßen Verfahrens eingesetzten Reaktionsteilnehmer werden lediglich durch den gewünschten Anteil der basischen Stickstoff aufweisenden, SiC-gebundenen organischen Reste in dem in der gegebenenfalls durchgeführten 3. Stufe des erfindungsgemäßen Verfahrens erzeugten Organopolysiloxane und durch die gewünschte mittlere Kettenlänge bestimmt.
Auch die gegebenenfalls durchgeführte 3. Stufe des erfindungsgemäßen Verfahrens wird je nach Temperaturbeständigkeit des jeweils verwendeten basischen Katalysators vorzugsweise bei 15° bis 200°C und beim Druck der umgebenden Atmosphäre, also bei 1020 hPa (abs.) oder etwa 1020 hPa (abs.), durchgeführt. Falls erwünscht, können aber auch höhere oder niedrigere Drücke angewendet werden.

Auch in der gegebenenfalls durchgeführten 3. Stufe des erfindungsgemäßen Verfahrens kann der Inhalt des Reaktionsgefäßes bewegt werden, wobei Rühren bevorzugt ist.

Auch die in der gegebenenfalls durchgeführten 3. Stufe des erfindungsgemäßen Verfahrens durchgeführte Umsetzung ist beendet, wenn der Inhalt des Reaktionsgefäßes zumindest nach Entfernen des darin enthaltenen Katalysators klar ist. 0,1 bis 10 Stunden sind im allgemeinen als Dauer auch dieser Umsetzung ausreichend.

Vorzugsweise wird nach einer Durchführung der 3. Stufe des erfindungsgemäßen Verfahrens der Katalysator aus dem Organopolysiloxan entfernt oder unwirksam gemacht.

Die verschiedenen Stufen des erfindungsgemäßen Verfahrens können in ein und demselben Reaktionsgefäß hintereinander oder in voneinander getrennten Reaktionsgefäßen durchgeführt werden. Das erfindungsgemäße Verfahren kann absatzweise, halbkontinuierlich oder vollkontinuierlich durchgeführt werden.

Die erfindungsgemäß in der 2. oder 3. Stufe hergestellten Organopolysiloxane bzw. die Salze von derartigen Organopolysiloxanen mit organischen oder anorganischen Säuren können für alle Zwecke verwendet werden, bei denen derartige Organopolysiloxane mit basischen Stickstoff aufweisenden, SiC-gebundenen organischen Resten bzw. deren Salze, eingesetzt werden können. Es sind dies beispielsweise die Verwendung als Trenn- oder Gleitmittel z.B. bei der Reifenherstellung oder haftungsmindernden Ausrüstung von Glaskeramik-Oberflächen, die Verwendung als Bestandteile von Textilbehandlungsmitteln, als Schmieröle, Entschäumer, Schaumstabilisatoren, Emulgiermittel, Antistatika und als Zusätze zu Thermoplasten oder Elastomeren.

In den folgenden Beispielen beziehen sich alle Angaben von Teilen und Prozentsätzen auf das Gewicht, soweit nichts anderes angegeben ist.

### Beispiel 1

### 1. Stufe:

Ein Gemisch aus 82,5 Teilen N-(2-Aminoethyl)-3-aminopropylmethyldimethoxysilan, also des Silans der Formel

H₂N(CH₂)₂NH(CH₂)₃Si(CH₃)(OCH₃)₂ ,

59,2 Teilen durch Trimethylsiloxygruppen endblockiertem Dimethylpolysiloxan mit durchschnittlich 10 Siloxaneinheiten je Molekül und 0,1 Teilen einer 40%-igen Lösung von Benzyltrimethylammoniumhydroxyd in Methanol wird unter trockenem Stickstoff 1 Stunde bei 80°C gerührt.

### 2. Stufe:

In dem bei Durchführung der 1. Stufe verwendeten Reaktionsgefäß wird dessen Inhalt mit 50 Teilen Wasser vermischt und 2 Stunden bei 80°C gerührt, wobei ein Teil des bei der Hydrolyse der an Silicium gebundenen Methoxygruppen gebildeten Methanols abdestilliert. Dann werden restliches Methanol sowie Wasser bei 13 hPa (abs.) abdestilliert. Dann wird das quaternäre Ammoniumhydroxid durch 60 Minuten Erwärmen auf 150°C bei 13 hPa(abs.) unwirksam gemacht und gleichzeitig das Organopolysiloxan von unter diesen Bedingungen siedenden Bestandteilen befreit. Es werden 113 Teile eines klaren, farblosen Öls erhalten. Dieses Organopolysiloxan hat eine Aminzahl (Anzahl der ml von 1-n-HCl, die zum Neutralisieren von 1 g des Öls erforderlich sind) von 6,6, eine Viskosität von 205 mm².s⁻¹ bei 25°C und gemäß dem ¹H-Kernmagnetischem Resonanzspektrum (NMR) weniger als 0,1 % Methoxygruppen.

### 3. Stufe:

Ein Gemisch aus 4 Teilen des in der 2. Stufe erhaltenen Organopolysiloxans, 500 Teilen eines Gemisches cyclischer Dimethylpolysiloxane mit 3 bis 10 Siloxaneinheiten je Molekül und Octamethylcyclotetrasiloxan als Hauptbestandteil, 20 Teilen des durch Trimethylsiloxygruppen endblockierten Dimethylpolysiloxans mit durchschnittlich 10 Siloxaneinheiten je Molekül und 0,2 Teilen der 40 %-igen Lösung von Benzyltrimethylammoniumhydroxyd in Methanol wird unter trockenem Stickstoff 2 Stunden bei 80°C gerührt. Dann wird das quaternäre Ammoniumhydroxyd durch 60 Minuten Erwärmen auf 150°C bei 13 hPa (abs.) unwirksam gemacht und gleichzeitig das Organopolysiloxan von unter diesen Bedingungen siedenden Bestandteilen befreit. Es werden 430 Teile eines klaren, farblosen Öls erhalten. Dieses Organopolysiloxan hat eine Aminzahl von 0,06 und eine Viskosität von 1140 mm².s⁻¹ bei 25°C.

Beispiel 2

Die in Beispiel 1 beschriebene Arbeitsweise wird wiederholt mit den Abänderungen, daß in der 3. Stufe
anstelle der 4 Teile des in der 1. Stufe erhaltenen Organopolysiloxans 128 Teile dieses Organopolysiloxans, anstelle der 500 Teile des Gemisches cyclischer Dimethylpolysiloxane 1600 Teile dieses Gemisches,
anstelle der 20 Teile des durch Trimethylsiloxygruppen endblockierten Dimethylpolysiloxans mit durchschnittlich 10 Siloxaneinheiten je Molekül 27 Teile dieses endblockierten Dimethylpolysiloxans und anstelle der 0,2 Teile der 40%-igen Lösung von Benzyltrimethylammoniumhydroxyd 0,7 Teile dieser Lösung verwendet werden.

Es werden 1400 Teile eines klaren, farblosen Öls mit einer Aminzahl von 0,6 und einer Viskosität von 960 mm².s⁻¹ bei 25°C erhalten.

### Beispiel 3

### 1. Stufe:

Ein Gemisch aus 222 Teilen N-(2-Aminoethyl)-3-aminopropyltrimethoxysilan, also des Silans der Formel

H₂N(CH₂)₂NH(CH₂)₃Si(OCH₃)₃ ,

296 Teilen durch Trimethylsiloxygruppen endblockiertem Dimethylpolysiloxan mit durchschnittlich 10 Siloxaneinheiten je Molekül und 0,25 Teilen der 40%-igen Lösung von Benzyltrimethylammoniumhydroxid in Methanol wird unter trockenem Stickstoff 1 Stunde bei 80°C gerührt.

### 2. Stufe:

In dem bei der Druchführung der 1. Stufe verwendeten Reaktionsgefäß wird dessen Inhalt mit 125 Teilen Wasser vermischt und 2 Stunden bei 80°C gerührt, wobei ein Teil des bei der Hydrolyse der an Silicium gebundenen Methoxygruppen gebildeten Methanols abdestilliert. Dann werden restliches Methanol sowie Wasser bei 13 hPa (abs.) abdestilliert. Als Rückstand werden bei dieser Destillation 390 Teile eines klaren, farblosen Öls erhalten. Dieses Organopoly siloxan hat eine Aminzahl von 4,6, eine Viskosität von 614 mm².s⁻¹ und gemäß ¹H-NMR-Spektrum weniger als 0,1 % Methoxygruppen.

### 3. Stufe:

Ein Gemisch aus 120 Teilen des in der 2. Stufe erhaltenen Organopolysiloxans, 1220 Teilen des Gemisches cyclischer Dimethylpolysiloxane mit 3 bis 10 Siloxaneinheiten je Molekül und Octamethylcyclotetrasiloxan als Hauptbestandteil, 30 Teilen des durch Trimethylsiloxygruppen endblockierten Dimethylpolysiloxans mit durchschnittlich 10 Siloxaneinheiten je Molekül und 0,5 Teilen der 40%-igen Lösung von Benzyltrimethylammoniumhydroxid in Methanol wird unter trockenem Stickstoff 2 Stunden bei 80°C gerührt. Dann wird das quaternäre Ammoniumhydroxid durch 60 Minuten Erwärmen auf 150°C bei 13 hPa (abs.) unwirksam gemacht und gleichzeitig das Organopolysiloxan von unter diesen Bedingungen siedenden Bestandteilen befreit. Es werden 1150 Teile eines klaren, farblosen Öls erhalten. Dieses Organopolysiloxan hat eine Aminzahl von 0,59 und eine Viskosität von 1174 mm².s⁻¹.

## Patentansprüche

1. Verfahren zur Herstellung von Organopolysiloxanen mit basischen Stickstoff aufweisenden, SiC-gebundenen, organischen Resten, dadurch gekennzeichnet, daß in einer
1. Stufe Silan der Formel
YSi(CH₃)ₓ(OR¹)₃₋ₓ ,
worin R¹ gleiche oder verschiedene Alkylreste mit 1 bis 4 Kohlenstoffatomen je Rest, der einwertige, SiC-gebundene, organische Rest mit basischem Stickstoff Y die Formel
R²₂NR³-
aufweist, worin R² Wasserstoff oder gleiche oder verschiedene Alkyl- oder Cycloalkyl- oder Aminoalkylreste und R³ einen zweiwertigen, von aliphatischen Mehrfachbindungen freien Kohlenwasserstoffrest mit einem Kohlenstoffatom oder 3 oder 4 Kohlenstoffatomen je Rest bedeuten, und x 0 oder 1 ist, oder Teilhydrolysat von derartigem Silan oder derartiges Silan und Teilhydrolysat von derartigem Silan mit Organo(poly)siloxan der Formel
R₃SiO(SiR₂O)ₙSiR₃,
worin R gleich oder verschiedene, einwertige gegebenenfalls fluorierte, gesättigte oder ungesättigte, aliphatische Kohlenwasserstoffreste, cycloaliphatische Kohlenwasserstoffreste, Aryl-, Alkaryl- oder Aralkylreste mit 1 bis 18 Kohlenstoffatomen je Rest und n 0 oder eine ganze Zahl im Wert von 1 bis 100 bedeuten, in Mengen von 0,1 bis 10 Gewichtsteilen je Gewichtsteil der Gesamtmenge von Silan der oben angegebenen Formel und Teilhydrolysat von derartigem Silan in Gegenwart von basischem Katalysator und in Abwesenheit von Wasser umgesetzt wird und in einer
2. Stufe das in der 1. Stufe erhaltene Organopolysiloxan mit Wasser umgesetzt wird, um Gruppen der Formel
-OR¹ ,
worin R¹ die oben dafür angegebenen Bedeutung hat, zu hydrolysieren, gleichzeitig und/oder anschließend die bei dieser Hydrolyse gebildeten Silanolgruppen miteinander kondensiert werden und das dabei gebildete Produkt von Alkanol und Wasser befreit und sowie gegebenenfalls in einer
3. Stufe das nach Beendigung der 2. Stufe vorliegende Produkt mit cyclischem Organopolysiloxan der Formel
(R₂SiO)ₘ ,
worin R die oben dafür angegebene Bedeutung hat und m eine ganze Zahl von 3 bis 12 ist, oder Organo(poly)siloxan der Formel
R₃SiO(SiR₂O)ₚSiR₃,
worin R die oben dafür angegebene Bedeutung hat und p 0 oder eine ganze Zahl im Wert von mindestens 1 ist, oder einem Gemisch aus derartigem linearem Organo(poly)siloxan und derartigem cyclischem Organopolysiloxan in Gegenwart von basischem Katalysator umgesetzt wird.

2. Verfahren nach Anspruch 1, dadurch gekennzeichnet, daß R der Methylrest ist.

## Claims

1. A process for the production of organopolysiloxanes with organic radicals containing basic nitrogen and bound to SiC, characterized by the fact that on a
1st stage hydrosilicon with the formula
YSi(CH₃)ₓ(OR¹)₃₋ₓ
is converted where R¹ contains identical or different alkyl radicals with 1 to 4 carbon atoms per radical, with the monovalent, SiC-bound, organic radical with basic nitrogen Y corresponding to the formula
R²₂NR³-
where R² means hydrogen or identical or different alkyl or cycloalkyl or aminoalkyl radicals and R³ means a bivalent hydrocarbon radical free from aliphatic multiple bonds with one carbon atom or 3 or 4 carbon atoms per radical, where x is 0 or 1 or a partial hydrolyzate of such hydrosilicon or such hydrosilicon and partial hydrolyzate of such hydrosilicon with organo(poly)siloxane of the formula
R₃SiO(SiR₂O)ₙSiR₃
where R means identical or different, monovalent - if applicable - fluorinated, saturated or unsaturated aliphatic hydrocarbon radicals, cycloaliphatic hydrocarbon radicals, aryl, alkaryl or aralkyl radicals with 1 to 18 carbon atoms per radical and where n means 0 or any integer between 1 and 100, at quantities of 0.1 to 10 parts by weight per part by weight of the total quantity of hydrosilicon of the above-quoted formula and partial hydrolyzate of such hydrosilicon in the presence of a basic catalyst and in the absence of water, and also characterized by the fact that on a 2nd stage the organopolysiloxane obtained on the 1st stage is converted with water in order to hydrolyze groups of the formula
-OR¹
where R¹ has meaning described for it in the foregoing, with the silanol groups produced during this hydrolization process simultaneously and/or thereafter being condensed with each other, and with the resultant product being freed of alkanol and water, and if applicable, with the product obtained on completion of the 2nd stage being subjected to a 3rd stage on which the product being converted with cyclic organopolysiloxane of the formula
(R₂SiO)ₘ
where R has meaning described for it in the foregoing and m being an integer between 3 and 12, or organo(poly)siloxane of the formula
R₃SiO(SiR₂O)ₚSiR₃
where R has meaning described for it in the foregoing and p being 0 or an integer having a value of at least 1, or a mixture of such linear organo(poly)siloxane and such cyclic organopolysiloxane in the presence of a basic catalyst.

2. A process as laid down in claim 1, however, characterized by the fact that R is the methyl radical.

## Revendications

1. Procédé pour la préparation d'organopolysiloxanes avec des résidus organiques présentant de l'azote basique fixé par SiC caractérisé par le fait que dans une
1re phase silane de la formule
YSi(CH₃)ₓ(OR¹)₃₋ₓ,
dans laquelle R¹ présente les mêmes ou différents alkyles avec 1 à 4 atomes de carbone par résidu et le résidu organique fixé par SiC monovalent présente avec de l'azote basique Y la formule
R²₂NR³-
dans laquelle R² signifie hydrogène ou les mêmes ou de différents alkyles, ou cycloalkyles ou aminoalkyles résiduels et R³ un résidu bivalent exempt de combinaisons multiples aliphatiques avec un atome de carbone ou 3 ou 4 atomes de carbones par résidu et x est 0 ou 1 ou un hydrolysat partiel d'un silane similaire avec de l'organo(poly)siloxane de la formule
R₃SiO(SiR₂O)ₙSiR₃ ,
dans laquelle R signifie les mêmes ou de différents résidus d'hydrocarbures monovalents, le cas échéant fluorurés, saturés ou non-saturés, aliphatiques, des résidus d'hydrocarbures cycloaliphatiques, des résidus d'aryle, alkaryl ou arakyl avec 1 à 18 atomes de carbone par résidu et n est 0 ou un nombre entier d'une valeur de 1 à 100 dans des quantités de 0,1 à 10 parties en poids par partie en poids de la quantité totale de silane de la formule susdite et un hydraloysat partiel d'un tel silane en présence d'un catalyseur basique et en absence d'eau est transformé dans une
2me phase ou l'organopolysiloxane obtenu dans la 1re phase est transformé avec de l'eau pour hydrolyser des groupes de la formule
-OR¹ ,
dans laquelle R¹ a la siginification mentionnée ci-dessus et que simultanément et/ou par la suite les groupes de silanol formés par l'hydrolyse sont condensés ensemble et que le produit formé est libéré d'alkanol et d'eau et que le cas échéant dans une
3me phase le produit présent après la 2me phase est transformé en présence d'un catayseur basique avec de l'organopolysiloxane de la formule
(R₂SiO)ₘ ,
dans laquelle R a la signification ci-dessus et m est un nombre entier de 3 à 12, ou avec de l'organo(poly)siloxane de la formule
R₃SiO(SiR₂O)ₚSiR₃ ,
dans laquelle R a la signification ci-dessus et p est 0 ou un nombre entier dont la valeur est au moins 1 ou un mélange d'un organo(poly)soloxane linéaire et un organopolysiloxane cyclique similaire.

2. Prodécé selon sollicitation 1, caractérisé par le fait que R est un résidu de méthyle.
